# DEMANDE DE BREVET EUROPEEN

(11) **EP 1 193 129 A1**
(43) Date de publication de la demande: **03.04.2002**
(21) Numéro de dépôt: 01490038.5
(22) Date de dépôt: 26.09.2001
(51) Int. Cl.: B60R 7/06

(54) **Vide-poches notamment pour véhicule automobile.**

(30) Priorité: 26.09.2000 FR 0012189
(71) Demandeur: Visteon Global Technologies, Inc., Dearborn, Michigan 48126-2490 (US)
(72) Inventeur: Toppani, Nicolas, Corso Savona, 45, 10029 Villastellone (IT)
(74) Mandataire: Duthoit, Michel

(57) **Abrégé**

L'invention est relative à un vide-poches, notamment pour véhicule automobile.

Il est constitué par :
- un corps principal (2), définissant le volume global du vide-poches (1),
- des moyens d'aménagement modulable (3), amovibles, permettant l'adaptation à la demande, de l'espace interne (4) dudit corps principal (1),
- des moyens d'ouverture frontale en deux parties (5 et 6) de la face frontale dudit corps (1), permettant l'accès à l'espace interne (4) en fonction de l'aménagement choisi et de son contenu (7).

## Description

La présente invention concerne un vide-poches, notamment pour véhicule automobile, destiné à recevoir, par exemple, différents objets tels que cartes routières, livres, lampe de poche, téléphone portable, boîtes de médicaments, verre, etc...

En fait, le contenu de ce type de vide-poches correspond à chaque individu, à sa personnalité et à son mode de vie. De tels vide-poches, connus aujourd'hui, ne permettent pas une adaptation au type de chacun, et plus précisément à son type d'utilisation de son véhicule.

C'est ainsi que l'utilisation d'un vide-poches d'un véhicule familial sera différent de celui d'un véhicule de direction ou d'un véhicule de V.R.P. ou encore d'un véhicule destiné essentiellement aux loisirs.

L'invention concerne un vide-poches, adaptable en fonction de l'utilisation du véhicule, permettant d'aménager son espace intérieur et d'adapter son ouverture à cet espace ainsi qu'à son environnement.

A cet effet, l'invention concerne un vide-poches, notamment pour véhicule automobile, caractérisé en ce qu'il présente :
- un corps principal, définissant le volume global du vide-poches,
- des moyens d'aménagement modulable, amovibles permettant l'adaptation à la demande, de l'espace interne dudit corps principal,
- des moyens d'ouverture frontale en deux parties de la face frontale dudit corps, permettant l'accès à l'espace interne en fonction de l'aménagement choisi et de son contenu.

La présente invention concerne également les caractéristiques qui ressortiront au cours de la description qui va suivre et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels :
- la figure 1 est une vue en perspective d'un vide-poches, selon l'invention, successivement en position de fermeture, de semi-ouverture, d'ouverture complète,
- la figure 2 est une vue en perspective d'un vide-poches, selon la figure 1, duquel ont été retirés les moyens de fermeture, pour une meilleure compréhension des moyens d'aménagement modulable, représenté selon trois possibilités,
- la figure 3 est une vue de détails, en coupe, desdits moyens d'aménagement,
- les figures 4, 5, et 6 représentent respectivement, en coupe transversale, un vide-poches selon les figures 1 à 3, en position de fermeture, de semi-ouverture, et d'ouverture complète,
- la figure 7 représente schématiquement trois possibilités d'aménagement et d'utilisation d'un vide-poches selon l'invention,
- la figure 8 représente schématiquement le vide-poches de l'invention selon les trois possibilités d'ouverture.

Le vide-poches 1 globalement désigné sur les figures comprend :
- un corps principal 2, définissant le volume global du vide-poches 1,
- des moyens d'aménagement modulable 3, amovibles permettant l'adaptation à la demande de l'espace interne 4 dudit corps principal 1,
- des moyens d'ouverture frontale, en deux parties 5 et 6, de la face frontale dudit corps 1, permettant l'accès à l'espace interne 4 en fonction de l'aménagement choisi et de son contenu 7a, 7b, 7c, 7d, 7e, 7f, 7g, 7h, etc....

Selon le présent exemple de réalisation, les moyens d'aménagement modulable 3 sont constitués par une tablette amovible.

Celle-ci constitue un plan d'appui et coopère avec deux parois latérales 8 et 9 du corps principal 1, pour être positionnée à la demande dans le vide-poches.

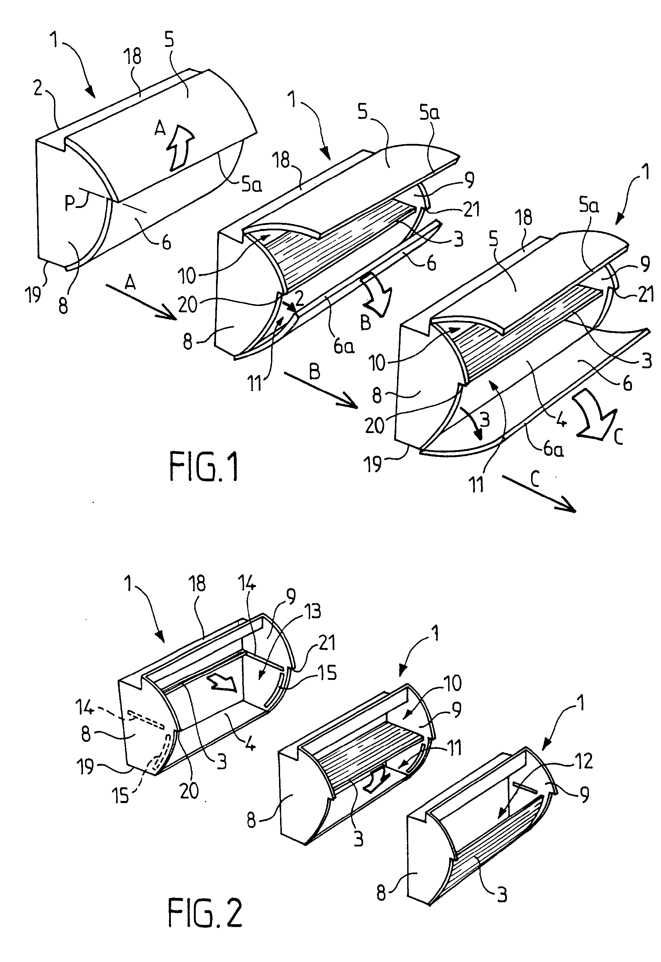

La tablette 3 est en fait susceptible de définir, comme le montre la figure 1, un double compartiment, l'un supérieur 10 et l'autre inférieur 11, lorsqu'elle est disposée de manière sensiblement horizontale dans l'espace 4.

En outre, comme le montre la figure 2, elle est également capable de définir une huche 12, lorsqu'elle est disposée de manière sensiblement verticale dans la partie inférieure frontale de l'espace 4.

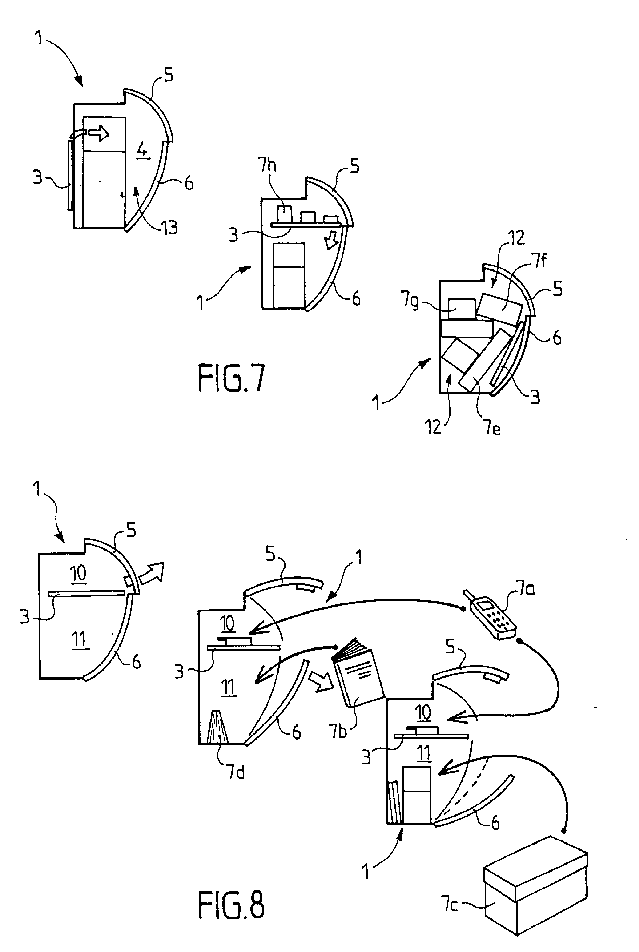

Enfin, ladite tablette 3 est également susceptible de définir un volume unique 13, notamment libre d'accès, sur toute la hauteur frontale de l'espace 4, lorsqu'elle est escamotée dans une partie interne du corps principal 1, comme le montrent les figures 2 et 7.

Selon le présent exemple de réalisation, le positionnement de la tablette 3 dans l'espace 4 est effectué par l'intermédiaire d'un ensemble de rainures 14 et 15, prévues au niveau des parois latérales 8, 9 du corps principal, et notamment réalisées symétriquement par paires de part et d'autre desdites parois latérales 8 et 9.

Ainsi, les rainures 14, 15 coopèrent avec les extrémités de la tablette 3 amovible, pour obtenir les différentes variantes d'aménagement.

Par exemple, pour l'une des paires de rainures 14, celles-ci sont réalisées de manière horizontale alors que pour l'autre paire de rainures 15, celles-ci sont réalisées de manière sensiblement verticale, en fait, légèrement inclinées selon le présent exemple pour tenir compte de la forme du corps principal 1 dans sa partie inférieure frontale.

Les dimensions desdites rainures 14 et 15 correspondent à celles des extrémités respectives de la tablette 3.

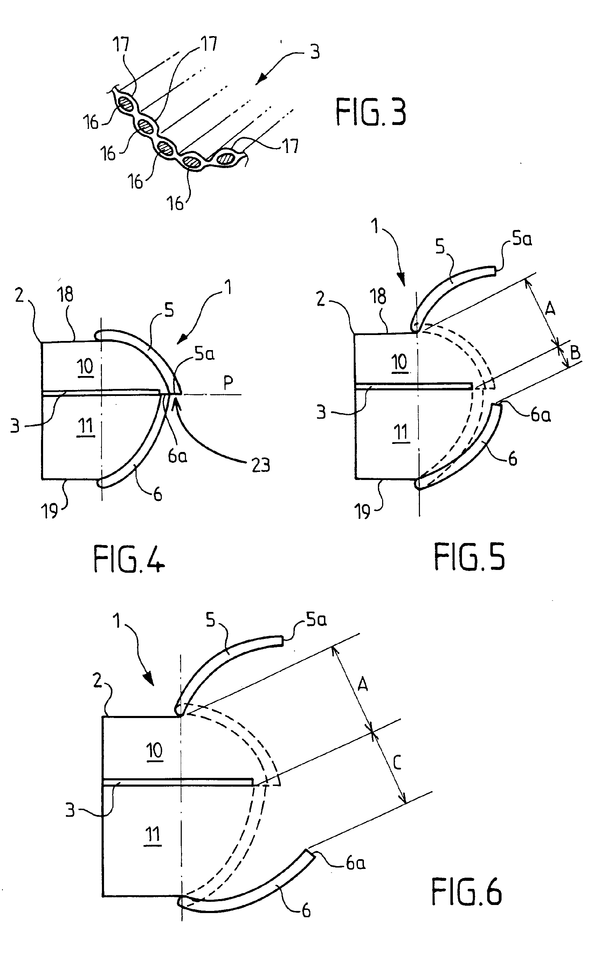

Selon un exemple de réalisation, représenté à la figure 3, la tablette 3 est constituée par une structure flexible. Elle est notamment formée d'éléments rigides longilignes 15, 16, notamment en forme de tige, rondin, latte ou autres, reliés entre eux par surmoulage d'un matériau souple 17, en constituant entre lesdits éléments une charnière ou similaire, de manière à conférer à ladite tablette 3 des caractéristiques de flexibilité lui permettant de passer d'une position à une autre, selon des rayons de courbure prédéterminés, comme le montre la figure 2, ce tout en étant insonorisée.

En ce qui concerne les moyens d'ouverture de la face frontale du corps principal 1, ceux-ci sont constitués par deux portillons 5 et 6, dont l'un 5 est articulé sur une paroi supérieure 18 dudit corps 1 pour permettre l'accès à une zone supérieure 10 de l'espace 4.

L'autre portillon 6 est quant à lui articulé sur une paroi inférieure 19 dudit corps 1 pour permettre l'accès à une zone inférieure 11 de l'espace 4.

Les extrémités libres 5a et 6a de l'un et l'autre des portillons 5 et 6 sont situées sur un même plan P, notamment horizontal pour assurer la fermeture de l'espace 4.

C'est ainsi que se différencie notamment le type d'ouverture selon l'invention par rapport aux systèmes d'ouverture connus traditionnels, tout en garantissant la non ouverture du vide-poches en cas de déclenchement d'un dispositif à coussins gonflables.

Selon une autre caractéristique de l'invention, les portillons supérieur 5 et inférieur 6 sont maintenus en position fermée ou ouverte par un système de lames ressorts (non représentées), positionnés sur leur axe de rotation respectif.

Comme le montrent les figures 1 et 2, les portillons 5 et 6 sont liés entre eux en fermeture par leur rebord d'extrémité libre 5a et 6a. L'un des rebords d'extrémité libre 5a, 6a, ici le rebord 6a, se loge sous des épaulements 20 et 21 des côtés latéraux 8 et 9 du corps 1, se trouvant en retrait vers l'intérieur du rebord d'extrémité libre, ici 6a du portillon supérieur 6, qui le coiffe pour le retenir en position de fermeture. Une telle disposition peut être inverse.

Comme le montre la figure 1, une première ouverture A du portillon inférieur s'effectue dans un premier temps A, par soulèvement du portillon supérieur 5. Ce dernier est apte à libérer le portillon inférieur 6 qui peut alors basculer, entraîné par son propre poids, engendrant une seconde ouverture dans un second temps B jusqu'à rencontrer un point dur. Ensuite, peut être obtenue l'ouverture complète dudit portillon inférieur dans un troisième temps C en agissant directement sur ce dernier et en forçant ledit point dur. On a alors une ouverture totale.

Le soulèvement du portillon supérieur 5 provoquant le basculement en dite première ouverture du portillon inférieur 6 s'effectue par l'intermédiaire d'une zone de prise 23, constituée, ici, substantiellement par le chevauchement du portillon supérieur 5 et du portillon inférieur 6.

Un tel système permet d'éliminer le sous-ensemble conventionnel d'ouverture consistant en une poignée, un renvoi, un tirant, et de garantir la non-ouverture du vide-poches en cas de désenclenchement du module à coussins gonflables.

En outre, le chevauchement précité des portillons supérieur 5 et inférieur 6 permet d'obtenir une ligne de style cachant les jeux et profils.

En fait, selon l'invention, il est permis d'obtenir un vide-poches permettant d'obtenir, comme illustré sur la figure 5, un accès complet au compartiment 10 lorsque la tablette est en position horizontale et un accès dit « boîte aux lettres » lorsque le portillon inférieur 6 n'est pas entièrement ouvert.

Comme le montre la figure 6, une ouverture complète dudit portillon inférieur 6 permet non seulement l'accès total au compartiment supérieur 10 lorsque la tablette est horizontale mais également l'accès total au compartiment inférieur 11.

Par ailleurs, le vide-poches conforme à l'invention pourra comprendre des moyens de fixation sur le corps de planche de façon à autoriser sa mise en place et son retrait rapide vis-à-vis dudit corps. On pourra ainsi facilement changer de version.

## Revendications

1. Vide-poches, notamment pour véhicule automobile, **caractérisé en ce qu'**il présente :
- un corps principal (2), définissant le volume global du vide-poches (1),
- des moyens d'aménagement modulable (3), amovibles, permettant l'adaptation à la demande de l'espace interne (4) dudit corps principal (1),
- des moyens d'ouverture frontale, en deux parties (5 et 6), de la face frontale dudit corps (1), permettant l'accès à l'espace interne (4) en fonction de l'aménagement choisi et de son contenu (7).

2. Vide-poches, selon la revendication 1, dans lequel les moyens d'aménagement modulable (3) sont constitués par une tablette amovible, constituant un plan d'appui coopérant avec deux parois latérales (8 et 9) du corps principal (1) pour définir:
- un double compartiment, l'un supérieur (10) et l'autre inférieur (11), lorsqu'elle est disposée de manière sensiblement horizontale dans l'espace (4),
- une huche (12), lorsqu'elle est disposée de manière sensiblement verticale dans la partie inférieure frontale de l'espace (4),
- un volume unique (13) sur toute la hauteur frontale de l'espace (4) lorsqu'elle est escamotée dans une partie interne du corps principal (1).

3. Vide-poches, selon la revendication 2, dans lequel le positionnement de la tablette (3) dans l'espace (4) est effectué par l'intermédiaire d'un ensemble de rainures (14 et 15), prévues au niveau des parois latérales 8 et 9 du corps principal 1, dans des directions différentes, lesdites rainures (14 et 15) coopérant avec les extrémités respectives de la tablette (3).

4. Vide-poches, selon la revendication 2, dans lequel ladite tablette (3) est constituée par une structure flexible.

5. Vide-poches, selon la revendication 4, dans lequel ladite structure flexible est formée d'éléments rigides longilignes (16) reliés entre eux par surmoulage d'un matériau souple (17), de manière à conférer à la dite tablette des caractéristiques de flexibilité lui permettant de passer d'une position à une autre, selon les rayons de courbure prédéterminés.

6. Vide-poches, selon la revendication 1, dans lequel les moyens d'ouverture de la face frontale du corps principal (1) sont constitués par deux portillons (5 et 6), dont l'un (5), articulé sur une paroi supérieure (18) dudit corps (1), permet l'accès à une zone supérieure (10) de l'espace (4), et l'autre (6), articulé sur une paroi inférieure (19) dudit corps (1), permet l'accès à une zone inférieure (11) de l'espace (4), les extrémités libres (5a et 6a) de l'un et l'autre des portillons (5 et 6) étant situées sur un même plan horizontal P pour assurer la fermeture de l'espace (4).

7. Vide-poches, selon la revendication 6, dans lequel les portillons supérieur (5) et inférieur (6) sont maintenus en position fermée ou en position ouverte par un système de lames ressorts, positionné sur leur axe de rotation.

8. Vide-poches, selon l'une des revendications 6 ou 7, dans lequel les portillons (5 et 6) sont liés entre eux en fermeture par leur rebord d'extrémité libre (5a, 6a) dont celui (6a), l'un des rebords d'extrémité libre (5a, 6a) se logeant sous des épaulements (20 et 21) des côtés latéraux (8 et 9) du corps (1), se trouvant en retrait vers l'intérieur du rebord d'extrémité libre, qui le coiffe pour le retenir en position de fermeture.

9. Vide-poches selon la revendication 8, dans lequel une première ouverture du portillon inférieur s'effectue dans un premier temps (A), par soulèvement du portillon supérieur (5), apte à libérer le portillon inférieur (6) qui bascule, entraîné par son propre poids engendrant une seconde ouverture dans un second temps (B), jusqu'à rencontrer un point dur, au-delà duquel est obtenue l'ouverture complète dudit portillon inférieur dans un troisième temps (C) en agissant directement sur ce dernier en forçant ledit point dur.

10. Vide-poches, selon la revendication 9, dans lequel le soulèvement du portillon supérieur (5), provoquant le basculement en dite première ouverture du portillon inférieur (6), s'effectue par l'intermédiaire d'une zone de prise (23), constituée substantiellement par le chevauchement du portillon supérieur (5) et du portillon inférieur (6).
